(19) Europäisches Patentamt
European Patent Office
Office européen des brevets

(11) **EP 3 548 556 B1**

(12) **EUROPEAN PATENT SPECIFICATION**

(45) Date of publication and mention
of the grant of the patent:
**07.10.2020 Bulletin 2020/41**

(21) Application number: **17801737.2**

(22) Date of filing: **27.11.2017**

(51) Int Cl.:
***C08L 23/12*** *(2006.01)*

(86) International application number:
**PCT/EP2017/080509**

(87) International publication number:
**WO 2018/104092 (14.06.2018 Gazette 2018/24)**

(54) **HETEROPHASIC PROPYLENE COPOLYMERS**

HETEROPHASISCHE PROPYLENCOPOLYMERE

COPOLYMÈRE DE PROPYLÈNE HÉTÉROPHASIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.12.2016 EP 16202191**

(43) Date of publication of application:
**09.10.2019 Bulletin 2019/41**

(73) Proprietor: **Basell Poliolefine Italia S.r.l.
20121 Milano (IT)**

(72) Inventors:
• **CATHELIN, Caroline
44122 Ferrara (IT)**
• **MASSARI, Paola
44122 Ferrara (IT)**
• **CAVALIERI, Claudio
44122 Ferrara (IT)**
• **CIARAFONI, Marco
44122 Ferrara (IT)**
• **PANTALEONI, Roberto
44122 Ferrara (IT)**

(74) Representative: **LyondellBasell
c/o Basell Poliolefine Italia
Intellectual Property
P.le Donegani 12
44122 Ferrara (IT)**

(56) References cited:
**WO-A1-2012/049204    WO-A1-2015/169831**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present disclosure relates to films obtained by an heterophasic propylene copolymer having a low content of oligomer and good tear resistance.

BACKGROUND OF THE INVENTION

Polypropylene is the material of choice for many applications. For instance polypropylene compositions are for obtaining films. Said compositions are - generally speaking - good processable and can be individually customized.
WO 2012/049204 relates to an heterophasic propylene copolymers having a low content of oligomer being obtained with a particular catalyst system containing two external electron donors.

SUMMARY OF THE INVENTION

The applicant discovered that film having a reduced amount of volatile compounds (oligomers) and good tear properties can be obtained by using a particular catalyst system containing bismuth.
An object of the present disclosure is a film comprising a polypropylene composition comprising:

A) from 50wt% to 90wt%, of a propylene homopolymer having a fraction insoluble in xylene at 25 °C, higher than 90 %, and a MFR L (Melt Flow Rate according to ISO 1133, condition L, i.e. 230°C and 2.16 kg load) from 0.5 to 200 g/10 min;
B) from 10 wt% to 50wt%; of a copolymer of propylene and ethylene having from 30.0 wt% to 70.0wt%, of ethylene derived units;
the sum of the amount of component A) and B) being 100;
the composition having:

i) an intrinsic viscosity of the fraction soluble in xylene at 25 °C comprised between 2.2 and 4.0 dl/g;
ii) a MFR L (Melt Flow Rate according to ISO 1133, condition L, i.e. 230°C and 2.16 kg load) from 0.5 to 50 g/10 min;
iii) a xylene soluble fraction ranging from 20 wt% to 50 wt%;
the polypropylene composition being obtained by a two steps polymerization process wherein:

step a) propylene is polymerized to obtain component A) in the presence of a catalyst comprising the product of the reaction between:

a) a solid catalyst component comprising Ti, Mg, Cl, and an internal electron donor compound characterized by the fact that it contains from 0.1 to 50%wt of Bi with respect to the total weight of said solid catalyst component;
b) an alkylaluminum compound and,
c) an electron-donor compound (external donor);

step b) propylene and ethylene are polymerized to obtain component B) in the presence of the polymerization product of step A).

DETAILED DESCRIPTION OF THE INVENTION

An object of the present disclosure is a film comprising a polypropylene composition comprising:

A) from 50wt% to 90wt%; preferably from 60wt% to 85wt%; more preferably from 67 wt% to 82wt%, of a propylene homopolymer having a fraction insoluble in xylene at 25 °C, higher than 90 %, preferably higher than 95% more preferably higher than 97 %; and a MFR L (Melt Flow Rate according to ISO 1133, condition L, i.e. 230°C and 2.16 kg load) from 0.5 to 200 g/10 min preferably from 10 to 110 g/10 min, more preferably from 30 to 70 g/10 min;
B) from 10 wt% to 50wt%; preferably from 15 wt% to 40 wt%; more preferably from 18 wt% to 33 wt%, %; of a copolymer of propylene and ethylene having from 30.0 wt% to 70.0wt%, preferably from 35.0wt% to 60.0wt%, more preferably from 40.0wt% to 58.0wt%, even more preferably from 52wt% to 57% of ethylene derived units;
the sum of the amount of component A) and B) being 100;
the composition having:

i) an intrinsic viscosity of the fraction soluble in xylene at 25 °C comprised between 2.2 and 4.0 dl/g; preferably between 2.3 and 4.0 dl/g more preferably between 2.5 and 3.5 dl/g;

ii) a MFR L (Melt Flow Rate according to ISO 1133, condition L, i.e. 230°C and 2.16 kg load) from 0.5 to 50 g/10 min preferably from 8 to 40 g/10 min more preferably from 10 to 30 g/10 min;

iii) a xylene soluble fraction ranging from 20 wt% to 50 wt%; preferably from 25 wt% to 35 wt%;

the polypropylene composition being obtained by a two steps polymerization process wherein:

step a) propylene is polymerized to obtain component A) in the presence of a catalyst comprising the product of the reaction between:

a) a solid catalyst component comprising Ti, Mg, Cl, and an internal electron donor compound characterized by the fact that it contains from 0.1 to 50%wt of Bi with respect to the total weight of said solid catalyst component;
b) an alkylaluminum compound and,
c) an electron-donor compound (external donor);

step b) propylene and ethylene are polymerized to obtain component B) in the presence of the polymerization product of step A).

From the above definitions it is evident that the term "copolymer" is referred to polymers containing only two kinds of comonomers.

The film of the present disclosure shows a low oligomer content and a good tear resistance as shown by the value of the Elmendorf test.

The film of the present invention can be a cast film or a biaxially oriented film (BOPP).

The film of the present disclosure can be advantageously used for packaging and in particular for food packaging due to the low oligomer content and tear resistance.

The polyolefin composition herein disclosed is prepared by a process comprising homopolymerizing propylene in a first stage and then propylene with ethylene in a second both stages being conducted in the presence of a catalyst comprising the product of the reaction between:

a) a solid catalyst component comprising Ti, Mg, Cl, and an electron donor compound characterized by the fact that it contains from 0.1 to 50%wt of Bi with respect to the total weight of said solid catalyst component;
b) an alkylaluminum compound and,
c) an electron-donor compound (external donor).

Preferably, in the catalyst component the content of Bi ranges from 0.5 to 40% more preferably from 1 to 35, especially from 2 to 25%wt and in a very particular embodiment from 2 to 20%wt.

The particles of solid component have substantially spherical morphology and average diameter ranging between 5 and 150 $\mu$m, preferably from 20 to 100 $\mu$m and more preferably from 30 to 90 $\mu$m. As particles having substantially spherical morphology, those are meant wherein the ratio between the greater axis and the smaller axis is equal to or lower than 1.5 and preferably lower than 1.3.

In general the amount of Mg preferably ranges from 8 to 30% more preferably from 10 to 25%wt.

Generally, the amount of Ti ranges from 0.5 to 5% and more preferably from 0.7 to 3%wt.

Preferred internal electron donor compounds are selected from alkyl and aryl esters of optionally substituted aromatic polycarboxylic acids such as esters of benzoic and phthalic acids, Specific examples of such esters are n-butylphthalate, di-isobutylphthalate, di-n-octylphthalate, ethyl-benzoate and p-ethoxy ethyl-benzoate.

The Mg/Ti molar ratio is preferably equal to, or higher than, 13, preferably in the range 14-40, and more preferably from 15 to 40. Correspondingly, the Mg/donor molar ratio is preferably higher than 16 more preferably higher than 17 and usually ranging from 18 to 50.

The Bi atoms preferably derive from one or more Bi compounds not having Bi-carbon bonds. In particular the Bi compounds can be selected from Bi halides, Bi carbonate, Bi acetate, Bi nitrate, Bi oxide, Bi sulphate, Bi sulfide. Compounds in which Bi has the valence $3^+$ are preferred. Among Bi halides, preferred are Bi trichloride and Bi tribromide. The most preferred Bi compound is $BiCl_3$.

The preparation of the solid catalyst component can be carried out according to several methods.

According to one method the solid catalyst component can be prepared by reacting a titanium compound of formula $Ti(OR)_{q-y}X_y$, where q is the valence of titanium and y is a number between 1 and q, preferably $TiCl_4$, with a magnesium chloride deriving from an adduct of formula $MgCl_2 \bullet pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0°C); the mixture is heated up to 80-130°C and kept at this temperature for 0.5-2 hours. The treatment with $TiCl_4$ can be carried out one or more times. The electron donor compound can be added in the desired ratios during the treatment with $TiCl_4$.

Several ways are available to add one or more Bi compounds in the catalyst preparation. According to the preferred option, the Bi compound(s) is/are incorporated directly into the $MgCl_2 \bullet pROH$ adduct during its preparation. In particular, the Bi compound can be added at the initial stage of adduct preparation by mixing it together with $MgCl_2$ and the alcohol. Alternatively, it can be added to the molten adduct before the emulsification step. The amount of Bi introduced ranges from 0.1 to 1 mole per mole of Mg in the adduct. Preferred Bi compound(s) to be incorporated directly into the $MgCl_2 \bullet pROH$ adduct are Bi halides and in particular is $BiCl_3$.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as $AlEt_2Cl$ and $Al_2Et_3Cl_3$, possibly in mixture with the above cited trialkylaluminums. The Al/Ti ratio is higher than 1 and is generally comprised between 50 and 2000.

Suitable external electron-donor compounds include silicon compounds, ethers, esters, amines, heterocyclic compounds and particularly 2,2,6,6-tetramethylpiperidine and ketones.

A preferred class of external donor compounds is that of silicon compounds of formula $(R_6)_a(R_7)_bSi(OR_8)_c$, where a and b are integers from 0 to 2, c is an integer from 1 to 4 and the sum (a+b+c) is 4; $R_6$, $R_7$, and $R_8$, are alkyl, cycloalkyl or aryl radicals with 1-18 carbon atoms optionally containing heteroatoms. Particularly preferred are the silicon compounds in which a is 1, b is 1, c is 2, at least one of $R_6$ and $R_7$ is selected from branched alkyl, cycloalkyl or aryl groups with 3-10 carbon atoms optionally containing heteroatoms and $R_8$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)-(2-ethylpiperidinyl)-dimethoxysilane, methyl(3,3,3-trifluoro-n-propyl)dimethoxysilane. Moreover, the silicon compounds in which a is 0, c is 3, $R_7$ is a branched alkyl or cycloalkyl group, optionally containing heteroatoms, and $R_8$ is methyl are also preferred. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

The polymerization processes are already known in the art such as in gas-phase operating in one or more fluidized or mechanically agitated bed reactors, slurry polymerization using as diluent an inert hydrocarbon solvent, or bulk polymerization using the liquid monomer (for example propylene) as a reaction medium. The polypropylene composition of the present disclosure can be also obtained with a polymerization process in two or more stages in which component A) is obtained in the first stages and then component B) is obtained in the second stages in the presence of component A). each stage can be in gas-phase, operating in one or more fluidized or mechanically agitated bed reactors, slurry phase using as diluent an inert hydrocarbon solvent, or bulk polymerization using the liquid monomer (for example propylene) as a reaction medium.

The polymerization is generally carried out at temperature of from 20 to 120°C, preferably of from 40 to 80°C. When the polymerization is carried out in gas-phase the operating pressure is generally between 0.5 and 5 MPa, preferably between 1 and 4 MPa. In the bulk polymerization the operating pressure is generally between 1 and 8 MPa, preferably between 1.5 and 5 MPa. Hydrogen is typically used as a molecular weight regulator.

The compositions to be used in the present disclosure can also contain additives commonly employed in the art, such as antioxidants, light stabilizers, heat stabilizers, nucleating agents, colorants and fillers.

The automotive interior element according to the present disclosure can be obtained starting from the polypropylene composition described above by means of the techniques commonly known in the art, such as injection molding, thermoforming and so on.

The following examples are given to illustrate and not to limit the present disclosure.

EXAMPLES

## Determination of Mg, Ti

The determination of Mg and Ti content in the solid catalyst component has been carried out via inductively coupled plasma emission spectroscopy on "I.C.P Spectrometer ARL Accuris".

The sample was prepared by analytically weighting, in a "Fluxy" platinum crucible", $0.1 \div 0.3$ grams of catalyst and 2 grams of lithium metaborate/tetraborate 1/1 mixture. After addition of some drops of KI solution, the crucible is inserted in a special apparatus "Claisse Fluxy" for the complete burning. The residue is collected with a 5% v/v $HNO_3$ solution and then analyzed via ICP at the following wavelengths: Magnesium, 279.08 nm; Titanium, 368.52 nm.

## Determination of Bi

The determination of Bi content in the solid catalyst component has been carried out via inductively coupled plasma emission spectroscopy on "I.C.P Spectrometer ARL Accuris".

The sample was prepared by analytically weighting in a 200 $cm^3$ volumetric flask $0.1 \div 0.3$ grams of catalyst. After slow addition of both ca. 10 milliliters of 65% v/v $HNO_3$ solution and ca. 50 $cm^3$ of distilled water, the sample undergoes a digestion for $4 \div 6$ hours. Then the volumetric flask is diluted to the mark with deionized water. The resulting solution is directly analyzed via ICP at the following wavelength: Bismuth, 223.06 nm.

## Determination of internal donor content

The determination of the content of internal donor in the solid catalytic compound was done through gas chromatography. The solid component was dissolved in acetone, an internal standard was added, and a sample of the organic phase was analyzed in a gas chromatograph, to determine the amount of donor present at the starting catalyst compound.

## Determination of X.I.

The Xylene Soluble fraction was measured according to ISO 16152, 2005, but with the following deviations (between brakets what prescribed by the ISO 16152)

The solution volume is 250 ml (200 ml)

During the precipitation stage at 25°C for 30 min, the solution, for the final 10 minutes, is kept under agitation by a magnetic stirrer (30 min, without any stirring at all)

The final drying step is done under vacuum at 70°C (100 °C)

The content of said xylene-soluble fraction is expressed as a percentage of the original 2.5 grams and then, by difference (complementary to 100), the X.I. %

## Intrinsic Viscosity (I.V.)

Determined in tetrahydronaphthalene at 135 °C.

## Molecular weight distribution (Mw/Mn)

Molecular weights and molecular weight distribution were measured at 150°C using a Waters Alliance GPCV/2000 instrument equipped with four mixed-bed columns PLgel Olexis having a particle size of 13 $\mu$m. The dimensions of the columns were 300 $\times$ 7.8 mm. The mobile phase used was vacuum distilled 1,2,4-trichlorobenzene (TCB) and the flow rate was kept at 1.0 ml/min. The sample solution was prepared by heating the sample under stirring at 150°C in TCB for one to two hours. The concentration was 1 mg/ml. To prevent degradation, 0.1 g/l of 2,6-di-*tert*-butyl-*p*-cresol were added. 300 $\mu$l (nominal value) of solution were injected into the column set. A calibration curve was obtained using 10 polystyrene standard samples (EasiCal kit by Agilent) with molecular weights in the range from 580 to 7 500 000. It was assumed that the $K$ values of the Mark-Houwink relationship were:

$$K = 1.21 \times 10^{-4} \text{ dl/g}$$

and $\alpha$ = 0.706 for the polystyrene standards,

$$K = 1.90 \times 10^{-4} \text{ dl/g}$$

and $\alpha$ = 0.725 for the experimental samples.

A third order polynomial fit was used for interpolate the experimental data and obtain the calibration curve. Data acquisition and processing was done by using Waters Empowers 3 Chromatography Data Software with GPC option.

### Melt flow rate (MIL)

The melt flow rate MIL of the polymer was determined according to ISO 1133 (230°C, 2.16 Kg).

### $^{13}$C NMR of propylene/ethylene copolymers

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with $\delta$-titanium trichloride-diethylaluminum chloride" M. Kakugo, Y. Naito, K. Mizunuma and T. Miyatake, Macromolecules, 1982, 15, 1150) using the following equations:

$$PPP = 100 \ T_{\beta\beta}/S$$

$$PPE = 100 \ T_{\beta\delta}/S$$

$$EPE = 100 \ T_{\delta\delta}/S$$

$$PEP = 100 \ S_{\beta\beta}/S$$

$$PEE = 100 \ S_{\beta\delta}/S$$

$$EEE = 100 \ (0.25 \ S_{\gamma\delta}+0.5 \ S_{\delta\delta})/S$$

$$S = T_{\beta\beta} + T_{\beta\delta} + T_{\delta\delta} + S_{\beta\beta} + S_{\beta\delta} + 0.25 \ S_{\gamma\delta} + 0.5 \ S_{\delta\delta}$$

The molar percentage of ethylene content was evaluated using the following equation:

$$E\% \ mol = 100 \ * \ [PEP+PEE+EEE]$$

The weight percentage of ethylene content was evaluated using the following equation:

$$E\% \text{ wt.} = \frac{100 * E\% \text{ mol} * MW_E}{E\% \text{ mol} * MW_{E+} P\% \text{ mol} * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of Propylene sequences was calculated as mm content from the ratio of the PPP $mmT_{\beta\beta}$ (28.90-29.65 ppm) and the whole $T_{\beta\beta}$ (29.80-28.37 ppm).

The ethylene content of component B) has been calculated from the total ethylene content by using the formula: Ethylene(B wt%)=Ethylene(tot wt%)/(amount B wt%)/100)

**Determination of the regioinvertions:** determined by means of $C^{13}$-NMR according to the methodology described by J.C. Randall in "Polymer sequence determination Carbon 13 NMR method", Academic Press 1977. The content of regioinvertions is calculated on the basis of the relative concentration of $S_{\alpha\beta} + S_{\beta\beta}$ methylene sequences.

## Melting temperature via Differential Scanning Calorimetry (DSC)

The melting points of the polymers (Tm) were measured by Differential Scanning Calorimetry (D.S.C.) on a Perkin Elmer DSC-1 calorimeter, previously calibrated against indium melting points, and according to ISO 11357-1, 2009 and 11357-3, 2011, at 20°C/min. The weight of the samples in every DSC crucible was kept at 6.0 ± 0.5 mg.

In order to obtain the melting point, the weighted sample was sealed into aluminium pans and heated to 200°C at 20°C/minute. The sample was kept at 200°C for 2 minutes to allow a complete melting of all the crystallites, then cooled to 5°C at 20°C/minute. After standing 2 minutes at 5°C, the sample was heated for the second run time to 200°C at 20°C/min. In this second heating run, the peak temperature (Tp,m) was taken as the melting temperature.

## Oligomer content

The determination of oligomer content by solvent extraction consists of treating 5g of polypropylene sample with 10 ml of methylendichloride ($CH_2Cl_2$) in an ultrasonic bath at 25°C for 4 hours. 1 $\mu$l of the extracted solution is injected into capillary column and analysed by using FID, without any filtration. For quantitative estimation of oligomer content a calibration based on external standard method has been applied. In particular a series of hydrocarbon (C12-C22-C28-C40) have been used.

## Flexural modulus

Determined according to IS0 178 and supplemental condition according to ISO 1873-2 with specimen injection moulded.

## Elmendorf

Measured according to ASTM D1922-15

## Example 1

## Procedure for the preparation of the spherical adduct

Microspheroidal $MgCl_2 \cdot pC_2H_5OH$ adduct was prepared according to the method described in Comparative Example 5 of WO98/44009, with the difference that $BiCl_3$ in a powder form and in the amount of 3 mol% with respect to the magnesium has been added before feeding of the oil.

**Procedure for the preparation of the solid catalyst component**

Into a 500 ml round bottom flask, equipped with mechanical stirrer, cooler and thermometer 300 ml of $TiCl_4$ were introduced at room temperature under nitrogen atmosphere. After cooling to 0°C, while stirring, diisobutylphthalate and 9.0 g of the spherical adduct (prepared as described above) were sequentially added into the flask. The amount of charged internal donor was such to meet a Mg/donor molar ratio of 8. The temperature was raised to 100°C and maintained for 2 hours. Thereafter, stirring was stopped, the solid product was allowed to settle and the supernatant liquid was siphoned off at 100°C. After the supernatant was removed, additional fresh $TiCl_4$ was added to reach the initial liquid volume again. The mixture was then heated at 120°C and kept at this temperature for 1 hour. Stirring was stopped again, the solid was allowed to settle and the supernatant liquid was siphoned off. The solid was washed with anhydrous hexane six times in temperature gradient down to 60°C and one time at room temperature. The obtained solid was then dried under vacuum and analyzed.

**Prepolymerization treatment**

Before introducing it into the polymerization reactors, the solid catalyst component described above have been contacted with triethyl aluminum (TEAL) and Dicyclopentyldimethoxysilane (DCPMS, D donor) in a ratio reported on table 1. Then the resulting mixture is subjected to prepolymerization as reported in table 1.

Polymerization

The polymerization run is carried out in continuous mode in a series of two reactors equipped with devices to transfer the product from one reactor to the one immediately next to it. The two reactors are fluidized bed gas-phase reactor. A propylene homopolymer is prepared in the first gas-phase reactor while an propylene ethylene copolymer is prepared in the second gas-phase reactor in the presence of the propylene homopolymer coming from the first stage. Hydrogen is used as molecular weight regulator.
The gas phase (propylene, ethylene and hydrogen) is continuously analyzed via gas-chromatography.
At the end of the run the powder is discharged and dried under a nitrogen flow.
The main polymerization conditions and the analytical data relating to the polymers produced in the reactors are reported in Table 1. Properties of the polymer are reported on table 2.

**Comparative example 2**

Preparation of the solid catalyst component

The catalyst of comparative example 2 is produced by using the same method used of the catalyst of example 1 but without using bismuth.

**Prepolymerization treatment**

Prepolymerisation treatment has been carried out according to the procedure of example 1

Polymerization

The polymerization was carried out by using the same procedure of example 1. The main polymerization conditions and the analytical data relating to the polymers produced in the reactors are reported in Table 1. Properties of the polymer are reported on table 2.

Table 1

| PROCESS CONDITIONS | | | |
|---|---|---|---|
| | Ex. 1 | Ex 2 | Comp Ex. 3 |
| **Precontact** | | | |
| Temperature °C | 20 | 20 | 20 |

8

(continued)

| PROCESS CONDITIONS | Ex. 1 | Ex 2 | Comp Ex. 3 |
|---|---|---|---|
| **Precontact** | | | |
| Residence time (min) | **9** | 9 | 9 |
| Teal/donor ratio | **5** | **5** | **5** |
| **Prepolymerization** | | | |
| Temperature °C | **10** | **10** | **10** |
| Residence time (min) | **14** | **14** | **14** |
| **first gas phase reactor** - propylene homopolymer | | | |
| Temperature, °C | 80 | 80 | 80 |
| Pressure, bar | 18 | 18 | 18 |
| Residence time, min | 58 | 52 | 49 |
| H2/C3 mol/mol | 0.056 | 0.056 | 0.03 |
| Split, wt% | 75 | 75 | 75 |
| **second gas-phase reactor** - ethylene/propylene copolymerization | | | |
| Temperature, °C | 75 | 75 | 75 |
| Pressure, bar | 14 | 14 | 14 |
| Residence time, min | 52 | 57 | 44 |
| H2/C2 mol/mol | 0.1 | 0.1 | 0.08 |
| C2/C2+C3 mol/ mol | 0.41 | 0.26 | 0.4 |
| split wt% | 25 | 25 | 27 |
| **C2-=ethylene; C3-=propylene; H2=hydrogen** | | | |

Cast film with a thickness of 50 $\mu$m were prepared by extruding each test composition in a single screw Collin extruder (length/diameter ratio of screw 1:25) at a film drawing speed of 7 m/min and a melt temperature of 210-250 °C. The Elmendorf test have been carried out in the samples the results have been reported on table 2

**Table 2**

| Example | | Ex1 | Ex2 | Comp ex 3 |
|---|---|---|---|---|
| **Component A)** | | | | |
| Homopolymer content | % | 73 | 74 | 73 |
| MFR "L" | g/10 , | 57 | 55 | 55 |
| Xylene soluble fraction | wt% | 2.0 | 2.0 | 2.5 |
| **Component B)** | | | | |
| Copolymer content | wt% | 27 | 26 | 27 |
| Ethylene content in component b) | wt% | 55 | 41 | 51 |
| Intrinsic viscosity of the Xylene soluble fraction | dl/g | 2.7 | 2.6 | 2.6 |
| **Property of the composition** | | | | |
| | | | | |
| Xylene -soluble fraction | wt% | 22.8 | 23 | 24 |

(continued)

| Property of the composition | | | | |
|---|---|---|---|---|
| MFR | g/10' | 17 | 17.1 | 18.7 |
| Elmendorf machine direction | gf | 330 | 192 | 142 |
| Elmendorf transverse direction | gf | 185 | 193 | 112 |
| Oligomer content | ppm | 1125 | 995 | 1300 |

From table 2 results that the tear strength (Elmendorf test) of the film of the present disclosure is considerably higher with respect to the comparative example in which the catalyst does not contains bismuth.

## Claims

1. A film comprising a polypropylene composition comprising:

A) from 50 wt% to 90 wt%; of a propylene homopolymer having a fraction insoluble in xylene at 25 °C, higher than 90 %; and a MFR L (Melt Flow Rate according to ISO 1133, condition L, i.e. 230°C and 2.16 kg load) from 0.5 to 200 g/10 min;
B) from 10 wt% to 50wt%; %; of a copolymer of propylene and ethylene having from 30.0 wt% to 70.0wt%, of ethylene derived units;
the sum of the amount of component A) and B) being 100;
the composition having:

i) an intrinsic viscosity of the fraction soluble in xylene at 25 °C comprised between 2.2 and 4.0 dl/g;
ii) a MFR L (Melt Flow Rate according to ISO 1133, condition L, i.e. 230°C and 2.16 kg load) from 0.5 to 50 g/10 min;
iii) a xylene soluble fraction ranging from 20 wt% to 50 wt%;
the polypropylene composition being obtained by a two steps polymerization process
wherein:

step a) propylene is polymerized to obtain component A) in the presence of a catalyst comprising the product of the reaction between:

a) a solid catalyst component comprising Ti, Mg, Cl, and an internal electron donor compound **characterized by** the fact that it contains from 0.1 to 50%wt of Bi with respect to the total weight of said solid catalyst component;
b) an alkylaluminum compound and,
c) an electron-donor compound (external donor);

step b) propylene and ethylene are polymerized to obtain component B) in the presence of the polymerization product of step A).

2. The film according to claim 1 wherein in the propylene composition component A) ranges from 60wt% to 85wt%; and component B) ranges from 15 wt% to 40 wt%.

3. The film according to claims 1 or 2 wherein in the propylene composition the MFR L (Melt Flow Rate according to ISO 1133, condition L, i.e. 230°C and 2.16 kg load) of component A ranges from 10 to 110 g/10 min.

4. The film according to anyone of claims 1-3 wherein in the propylene composition the ethylene derived units of component B) ranges from 35.0wt% to 60.0wt%.

5. The film according to anyone of claims 1-4 wherein in the propylene composition the ethylene derived units of component B) ranges from 40.0wt% to 58.0wt%.

6. The film according to anyone of claims 1-5 wherein the propylene composition has an intrinsic viscosity of the fraction soluble in xylene at 25 °C comprised between 2.3 and 4.0 dl/g.

7.  The film according to anyone of claims 1-6 wherein the propylene composition has an intrinsic viscosity of the fraction soluble in xylene at 25 °C comprised between 2.5 and 3.5 dl/g.

8.  The film according to anyone of claims 1-7 wherein in the propylene composition the xylene soluble fraction ranges from 25 wt% to 35 wt%.

9.  The film of claims 1-8 being a cast film.

10. The film of claims 1-8 being a BOPP film

**Patentansprüche**

1.  Folie, umfassend eine Polypropylenzusammensetzung, umfassend:

    A) 50 Gew.% bis 90 Gew.% eines Propylenhomopolymers mit einer in Xylol bei 25 °C unlöslichen Fraktion von mehr als 90 % und einer MFR L (Schmelzflussrate gemäß ISO 1133, Bedingung L, d. h. 230 °C und 2,16 kg Last) von 0,5 bis 200 g/10 min;
    B) 10 Gew.% bis 50 Gew.% eines Copolymers von Propylen und Ethylen mit 30,0 Gew.% bis 70 Gew. % von Ethylen abgeleiteten Einheiten;
    wobei die Summe der Menge der Komponenten A) und B) 100 beträgt;
    wobei die Zusammensetzung aufweist:

    i) eine Grenzviskosität der in Xylol bei 25 °C löslichen Fraktion, die zwischen 2,2 und 4,0 dl/g liegt;
    ii) eine MFR L (Schmelzflussrate gemäß ISO 1133, Bedingung L, d. h. 230 °C und 2,16 kg Last) von 0,5 bis 50 g/10 min;
    iii) eine in Xylol lösliche Fraktion im Bereich von 20 Gew.% bis 50 Gew.%;
    wobei die Polypropylenzusammensetzung nach einem Zweischritt-Polymerisationsverfahren erhalten wird, wobei:

    in Schritt a) Propylen polymerisiert wird, um Komponente A) in Gegenwart eines Katalysators zu erhalten, der das Produkt der Reaktion zwischen:

    a) einer festen Katalysatorkomponente, die Ti, Mg, Cl und eine interne Elektronendonorverbindung umfasst, **gekennzeichnet durch** die Tatsache, dass sie in Bezug auf das Gesamtgewicht der festen Katalysatorkomponente 0,1 bis 50 Gew.% Bi enthält;
    b) einer Alkylaluminiumverbindung und,
    c) einer Elektronendonorverbindung (externem Donor) umfasst;

    in Schritt b) Propylen und Ethylen polymerisiert werden, um Komponente B) in Anwesenheit des Polymerisationsprodukts von Schritt a) zu erhalten.

2.  Folie nach Anspruch 1, wobei in der Propylenzusammensetzung Komponente A) im Bereich von 60 Gew.% bis 85 Gew.% liegt und Komponente B) im Bereich von 15 Gew.% bis 40 Gew.% liegt.

3.  Folie nach den Ansprüchen 1 oder 2, wobei in der Propylenzusammensetzung die MFR L (Schmelzflussrate gemäß ISO 1133, Bedingung L, d. h. 230 °C und 2,16 kg Last) der Komponente A im Bereich von 10 und 110 g/10 min liegt.

4.  Folie nach einem der Ansprüche 1 bis 3, wobei in der Propylenzusammensetzung die von Ethylen abgeleiteten Einheiten der Komponente B) im Bereich von 35,0 Gew.% bis 60,0 Gew.% liegen.

5.  Folie nach einem der Ansprüche 1 bis 4, wobei in der Propylenzusammensetzung die von Ethylen abgeleiteten Einheiten der Komponente B) im Bereich von 40,0 Gew.% bis 58,0 Gew.% liegen.

6.  Folie nach einem der Ansprüche 1 bis 5, wobei die Grenzviskosität der in Xylol bei 25 °C löslichen Fraktion der Propylenzusammensetzung zwischen 2,3 dl/g und 4,0 dl/g liegt.

7. Folie nach einem der Ansprüche 1 bis 6, wobei die Grenzviskosität der in Xylol bei 25 °C löslichen Fraktion der Propylenzusammensetzung zwischen 2,5 dl/g und 3,5 dl/g liegt.

8. Folie nach einem der Ansprüche 1 bis 7, wobei die in Xylol lösliche Fraktion in der Propylenzusammensetzung im Bereich von 25 Gew.% bis 35 Gew.% liegt.

9. Folie nach den Ansprüchen 1 bis 8, die eine Gießfolie ist.

10. Folie nach den Ansprüchen 1 bis 8, die eine BOPP-Folie ist.


**Revendications**

1. Film comprenant une composition de polypropylène comprenant :

   A) 50% en poids à 90% en poids d'un homopolymère de propylène présentant une fraction insoluble dans le xylène à 25 °C supérieure à 90% et un MFR L (indice de fluidité à chaud selon la norme ISO 1133, condition L, c'est-à-dire à 230°C et sous une charge de 2,16 kg) de 0,5 à 200 g/10 min ;
   B) 10% en poids à 50% en poids d'un copolymère de propylène et d'éthylène présentant 30,0% en poids à 70% en poids de motifs dérivés d'éthylène ;
   la somme de la quantité de constituant A) et de constituant B) valant 100 ;
   la composition présentant :

      i) une viscosité intrinsèque de la fraction soluble dans le xylène à 25 °C située entre 2,2 et 4,0 dl/g ;
      ii) un MFR L (indice de fluidité à chaud selon la norme ISO 1133, condition L, c'est-à-dire à 230°C et sous une charge de 2,16 kg) de 0,5 à 50 g/10 min ;
      iii) une fraction soluble dans le xylène située dans la plage de 20% en poids à 50% en poids ;
      la composition de polypropylène étant obtenue par un procédé de polymérisation en deux étapes :

         étape a) polymérisation de propylène pour obtenir le constituant A) en présence d'un catalyseur comprenant le produit de la réaction entre :

            a) un constituant catalytique solide comprenant du Ti, du Mg, du Cl et un composé donneur d'électrons interne **caractérisé en ce qu'**il contient 0,1 à 50% en poids de Bi par rapport au poids total dudit constituant catalytique solide ;
            b) un composé d'alkylaluminium et,
            c) un composé donneur d'électrons (donneur externe) ;

         étape b) polymérisation de propylène et d'éthylène pour obtenir le constituant B) en présence du produit de polymérisation de l'étape a).

2. Film selon la revendication 1 où, dans la composition de propylène, le constituant A) représente 60% en poids à 85% en poids ; et le constituant B) représente 15% en poids à 40% en poids.

3. Film selon les revendications 1 ou 2 où, dans la composition de propylène, le MFR L (indice de fluidité à chaud selon la norme ISO 1133, condition L, c'est-à-dire à 230°C et sous une charge de 2,16 kg) du constituant A est situé dans la plage de 10 à 110 g/10 min.

4. Film selon l'une quelconque des revendications 1 à 3 où, dans la composition de propylène, les motifs dérivés d'éthylène du constituant B) représentent 35% en poids à 60% en poids.

5. Film selon l'une quelconque des revendications 1 à 4 où, dans la composition de propylène, les motifs dérivés d'éthylène du constituant B) représentent 40% en poids à 58% en poids.

6. Film selon l'une quelconque des revendications 1 à 5, la composition de propylène présentant une viscosité intrinsèque de la fraction soluble dans le xylène à 25°C située entre 2,3 et 4,0 dl/g.

7. Film selon l'une quelconque des revendications 1 à 6, la composition de propylène présentant une viscosité intrinsèque de la fraction soluble dans le xylène à 25°C située entre 2,5 et 3,5 dl/g.

**8.** Film selon l'une quelconque des revendications 1 à 7 où, dans la composition de propylène, la fraction soluble dans le xylène représente 25% en poids à 35% en poids.

**9.** Film selon les revendications 1 à 8, le film étant un film coulé.

**10.** Film selon les revendications 1 à 8, le film étant un film de BOPP

**EP 3 548 556 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012049204 A
- US 4399054 A
- US 4469648 A
- WO 9844009 A

**Non-patent literature cited in the description**

- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536
- **J.C. RANDALL.** Polymer sequence determination Carbon 13 NMR method. Academic Press, 1977